# EUROPEAN PATENT SPECIFICATION

(11) **EP 2 488 421 B1**
(45) Date of publication and mention of the grant of the patent: **26.06.2013**
(21) Application number: 10757425.3
(22) Date of filing: 27.09.2010
(51) Int. Cl.: B65D 75/30, B65D 75/58, B65D 81/20

(54) **PACKAGE FOR CUSHIONING FOOD PRODUCT**
VERPACKUNG ZUR POLSTERUNG EINES LEBENSMITTELPRODUKTS
EMBALLAGE POUR AMORTISSEMENT D'UN PRODUIT ALIMENTAIRE

(30) Priority: 14.10.2009 US 578929
(43) Date of publication of application: 22.08.2012
(73) Proprietor: Nestec S.A., 1800 Vevey (CH)
(72) Inventor: STRILICH, Erik M, Roselle Illinois 60172 (US); GOWENS, Patrick Albert, Libertyville Illinois 60048 (US); COGLEY, Paul Andrew, Gurnee Illinois 60031 (US)
(74) Representative: Elleby, Gudrun
(86) International application number: PCT/EP2010/064267
(87) International publication number: WO 2011/045174

(56) References cited:
- EP-A1- 1 134 166
- EP-A1- 2 055 651
- WO-A1-91/03407
- WO-A1-96/15049
- WO-A1-99/24331
- US-A- 5 657 874
- US-A1- 2009 047 394

## Description

### Field

This application generally relates to a rigid bottom, flexible top package for a food product and, in particular, a package configured for cushioning the food product therein.

### Background

Packaging of food products and, in particular, frozen or refrigerated pizzas, can be designed to cushion the pizza from impacts during shipping and handling. This is typically accomplished by placing a cardboard insert against a bottom surface of the pizza. A flexible outer film wrapper is formed to surround the cardboard insert and pizza to maintain the insert generally in place against the pizza.

In one type of pizza packaging, the outer film wrapper is the only other outer packaging. While a low cost package, this can be undesirable for several reasons. First, the sides and top of the pizza do not have cushioning, thereby potentially exposing them to breakage or other marring during shipping and handling. Second, it can be undesirable to print graphics or nutritional information on the outer wrapper because the outer wrapper can deform during wrapping, resulting in an uneven surface unsuitable for preprinted graphics. Instead, in this type of pizza packaging, graphics or nutritional information can be printed on a paper that is inserted either on the bottom of the package, between the insert and the outer wrapper, or the top of the package, between an upper surface of the pizza and the outer wrapper. It can be undesirable to have to separately provide the separate paper.

In another type of pizza packaging, the pizza, cardboard insert and outer film wrapper are placed inside a secondary package, often a cardboard box or carton. While the cardboard box can address some of the disadvantages with pizza packages lacking a cardboard box, such as providing additional cushioning and space for graphics to be printed, it also has its own disadvantages. For example, it has a higher cost than simply having the outer film wrapper be the final packaging layer, it can limit the shape of the package to being rectangular, the cushioning of the top and side surfaces of the pizza can be insufficient, it results in additional material that must be discarded, and the pizza is prone to shifting inside the box. This shifting can cause the pizza to sustain breakage or bruising as well as to cause toppings to shift and spill over the edge of the pizza, thus losing some of its freshness and visual appeal when it is opened by the consumer. WO 96 15049 discloses another pizza container in the form of a tray.

### Summary

A package having a rigid or semi-rigid bottom tray and a flexible top is provided for storing a perishable food product therein. The tray can be sized to receive any shaped food product and, in particular, to receive a circular shaped food product such as a round pizza, inside an interior recess therein. The tray can be covered with a flexible top portion, such as an air impermeable flexible film, or an outer film. The food product inside the tray can be vacuum skin-sealed with a separate film, such as a first film layer, or an inner film. The inner film can be vacuum-sealed in close contact with the food product to form a tight seal that does not allow the food product and/or loose food particles thereon to shift when being transported and helps to maintain freshness of the food product. The inner film is placed directly upon the pizza, while the outer film is sealed across the top opening of the tray. A space between the inner and outer films can be filled with a gas and can cushion the top of the food product. The inner film sealed to and around the food product, such as a pizza product, can retain pizza toppings in place, secure against the crust, in order to limit or prevent substantial shifting of the toppings on the pizza during transportation of the package. Additionally, the air in the head space between the two film layers offers a damping effect during distribution thus absorbing impact forces to provide a cushioning effect to the top of the pizza and protects the freshness of the crust and toppings.

Additionally, the tray can further contain protuberances along the sidewalls and the bottom wall to provide further cushioning of the food product inside the tray. The sidewall protuberances can contain ribs that extend outward around the perimeter of the tray and that provide cushioning to the side of the food product. Similarly, the bottom wall of the tray can contain raised protuberances that extend upwards into the interior of the tray and support the food product thereon, effectively providing a cushioning effect to the bottom surface of the food product. As a result of the built-in bottom cushions, an additional cardboard insert for added cushioning upon which the food product rests can be avoided.

The space between the film layers can contain either a modified atmosphere gas or a typical atmospheric gas between the two film layers. Additionally, the space between the inner film and the tray can also be flushed with a modified atmosphere gas or completely evacuated of air. The head space between the film layers can have a pressure greater than the pressure between the inner film and food product. This pressure differential can help to maintain the food product and any toppings securely in place as well as keeping the package intact when shipping across areas of high altitude that without this pressure differential could cause the films to expand and possibly break or leak. The outer film can be a moisture barrier film that seals to a portion of the inner film. Both the inner and outer films can be removed together. The combination of the tray and flexible top can together provide the outer packaging of the food product. Thus, use of an added external packaging, such as a carton or box, can be avoided.

The tray can have a generally circular bottom surface or wall with one or more generally circular protuberances or foot portions adjacent the bottom wall and having a bottom surface of the foot portion in the same plane as a bottom surface of the bottom wall, such that when the package is placed upon its bottom surface the bottom wall and bottom foot portions are at an even level. These foot portions, when viewed from above, i.e., from the opening of the rigid tray, extend out from the periphery of the recess and can provide a finger notch to assist in removal of the food product stored therein. The foot portions along the bottom wall can distribute and absorb impact forces to cushion the food product inside when the package is placed upon its bottom surface and stored or shipped in this fashion.

The tray may also contain support feet along its sidewall, which allow for the package to be supported in an upright position on its side edge by resting upon at least the side support feet. In other aspects, the package can be supported in an upright, vertical position on its side edge by any combination of features, such as a paperboard back card, the tray flange, side supports other than feet, and the like. The support feet along the bottom wall and/or the sidewall can absorb impact forces placed upon the package when it is transported and when stacked upon other packages. The support feet can further rest upon a flange or outer rim of an adjacent tray or package, rather than resting upon, and subsequently supplying a force to, the top surface of the adjacent package directly upon the food product stored therein.

Additionally, the pizza package is provided to stand upright resting upon a side edge, such as a combination of the flange of the tray and a sidewall protuberance, or a flange and a back card, and the like, to allow for front indicia display and for better product stacking/display.

### Brief Description of the Drawings

FIGURE 1 is a perspective view of a first embodiment of a rigid bottom, flexible top package;

FIGURE 2 is a bottom plan view of the package of FIG. 1;

FIGURE 3 is a cross-sectional view of the package taken along the line 3-3 of FIG. 1;

FIGURE 4 is an exploded view of the package of FIG. 1;

FIGURE 5 is a perspective view of a second embodiment of a rigid bottom, flexible top package;

FIGURE 6 is a perspective view of a third embodiment of a rigid bottom, flexible top package having side protuberances;

FIGURE 7 is a back perspective view of a fourth embodiment of a rigid bottom, flexible top package in an upright position;

FIGURE 8 is a side view of the package of FIG. 7;

FIGURE 9 is a back perspective view of a fifth embodiment of a rigid bottom, flexible top package in an upright position;

FIGURE 10 is a side view of the package of FIG. 9;

FIGURE 11 is a back perspective view of a sixth embodiment of a rigid bottom, flexible top package in an upright position; and

FIGURE 12 is a side view of the package of FIG. 11.

### Detailed Description

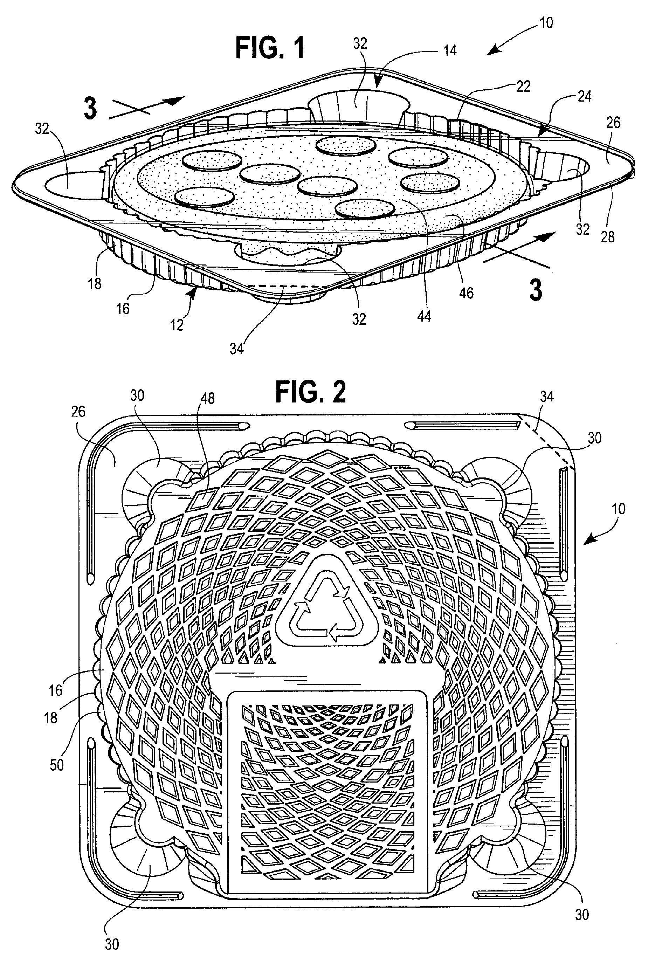

A package having a rigid bottom base or tray and a flexible top portion is provided for receiving and storing a perishable food product therein, as illustrated in FIGS. 1-12. The term "rigid" can be used herein to also include the term semi-rigid. The tray has a generally circular opening therein for receiving a food product, such as a pizza, which can be covered by a sheet of flexible film. The opening to the tray can be covered by a second sheet of flexible film. Thus, the flexible top portion can comprise dual film layers, one inner film wrapped around a top and side of the food product and another outer film sealed to the inner film at flanges of the tray. The tray can have protuberances along a bottom surface to aid in absorbing the energy from shock impacts. The tray can further have feet or protuberances on a side edge thereof to also aid in absorbing energy from shock impacts as well as aiding the package in standing upright on its bottom side edge. Additionally, an atmosphere of gas or air can be provided between a space located between the two film layers.

Turning to FIG. 1, a first embodiment is shown of a package 10 having a rigid bottom tray 12 and a flexible top portion 14. The package 10 shown in FIGS. 1-4 is illustrated for housing a pizza product 44, however, any perishable food product can be stored therein. In one aspect, the food product can have a substantially planar bottom surface, a side surface and a top surface, the top surface further having a plurality of displaceable toppings, *i.e*., toppings that are loosely placed or sprinkled on the top surface of the food product. If the food product is a pizza, displaceable toppings may comprise such toppings as pepperoni, cheese, vegetables, sausage, and other typical pizza toppings. The rigid bottom tray 12 can comprise a bottom wall 16 having a generally circular shape and an upstanding sidewall 18, where the bottom wall 16 and the sidewall 18 define an interior of the tray 12 having an opening 22 at an upper edge of the sidewall 18. A recess 20 can be defined by an interior surface of the bottom wall 16 and sidewall 18 and the opening 22. The recess 20 can be shaped similarly to the food product to be stored therein. Therefore, if a pizza product 44 is to be packaged, a generally circular recess 20 is provided to match the circular shape of the pizza 44.

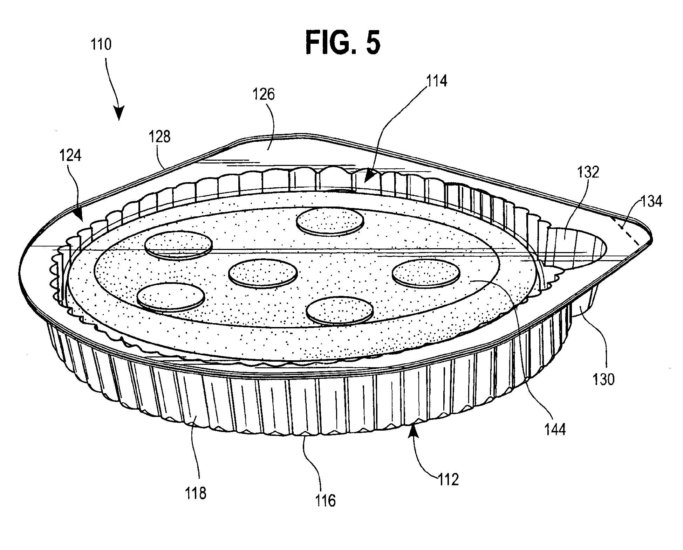

Surrounding the opening 22 of the tray 12 where the sidewall 18 terminates at an upper edge thereof, is a continuous flange 24 extending about the periphery of the sidewall and that provides a planar contact surface for receiving a film thereat, to be discussed in more detail below. The flange 24 extends beyond the generally circular plane of the bottom wall 16 yet is in the same plane as the upper edge of the sidewall 18. The perimeter of the continuous flange 28 can provide a shape that is different than the generally circular bottom wall 16, and can determine the overall shape of the package 10. A portion of at least one edge of the flange 24 is generally straight, with the overall package 10 appearing to take on the shape provided by the flange 24. The overall package 10 shape can have any appropriate shape and, in particular, a shape that has a portion of at least one edge being generally straight, such as a package 10 that is rectangular, square, semi-circular, circular but with a straight-edge at one end, a U-shape, diamond shaped, tear-drop shaped, and so forth. For instance, the package can have a rectangular shape, as shown in FIGS. 1-4 and 7-8, a U-shape, as in FIGS. 5-6 and 9-12, or any variations thereof. In one aspect, the U-shape design can be modified to have straight side edges, or shoulders, with a curved top such that the overall package shape can be a combination of a rectangular portion with a circular or curved portion. This modified shape can have upper corners instead of curved continuous edges, that can be present with the un-modified U-shape. The flange 24 can have a horizontal surface 26 that extends out perpendicular from the upper edge of the sidewall 18 some distance in order to provide the desired shape of the package 10, and that ends in an outer rim 28 or edge of the flange. Therefore, the width of the flange 24 varies depending upon the desired shape of the package.

The tray 12 can have one or more support feet 30 along the exterior of the bottom wall 16, as shown in FIGS. 2 and 5. In one aspect, there can be four bottom wall support feet 30, as in FIG. 2, and in another aspect there may be only one, as in FIG. 5; however, any other appropriate number of bottom wall support feet 30 may be provided. The bottom wall support feet 30 along the bottom wall 16 can distribute and absorb the energy from impact forces such as when the package 10 is placed upon its bottom surface during distribution and shipping, and/or when the package 10 is stacked upon an adjacent package 10 when stored in a horizontal position, *i.e*., when the bottom wall 16 of one is placed on the top portion 14 of another. Thus, essentially replacing the need for a bottom cardboard insert to cushion the pizza product 44. For example, when the packages 10 are stacked on top of like packages 10 in a horizontal position, the bottom wall support feet 30 on the bottom wall 16 can contact or rest upon the flange 24 of the adjacent, like package 10 below it, rather than resting upon the outer or top film 42 of the package 10 below it. This orientation of the bottom wall support feet 30 resting upon the flange 24 can allow for the package 10 to absorb shock impacts rather than passing that impact on to the pizza product 44, thus allowing for the pizza product 44 to remain intact and limiting or preventing breakage of the crust 46 or pizza 44. Furthermore, these bottom wall support feet 30, when viewed from above, *i.e*., from the opening 22 of the rigid tray 12, appear as a recess or well 32 that extends outwardly from the sidewall 18 of the tray 12 and from the main circular recess 20. This well 32 made by the bottom wall support feet 30 can provide a finger notch to assist in removal of the food product stored therein, and can be sized to facilitate access to a portion of the side surface of the food product for removal of the food product from the tray 12 after the inner 40 and outer films 42 have been removed.

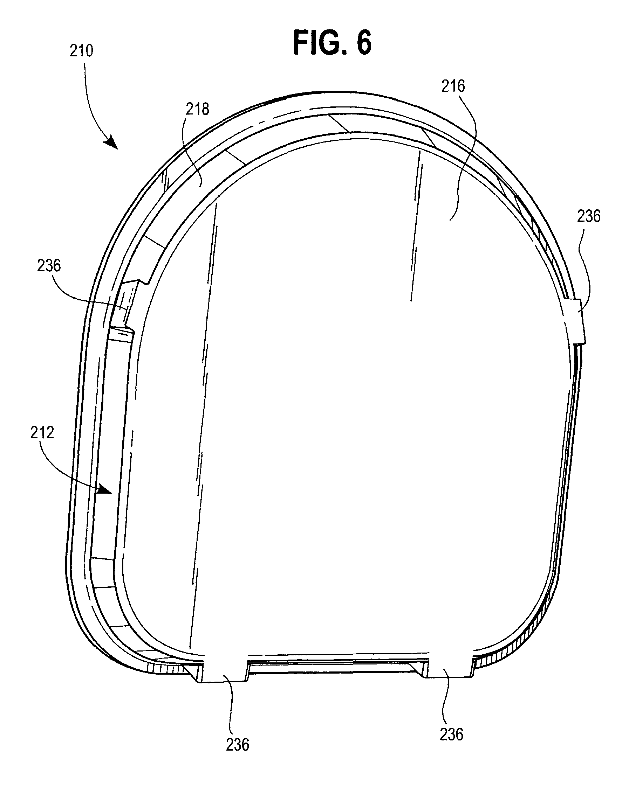

Additionally, at least one support foot 236 can be located on the sidewall 218 of the tray 212, as shown in FIG. 6, which can be beneficial in providing additional support when standing the package 210 upright. In one aspect, these sidewall support feet 236 may comprise a negative or reverse draft angle foot. The negative draft angle feet 236 can be integrated into the tray design 212 at the exterior surface of the sidewall 218 and can angle away from the horizontal normal forces placed upon the package 210 such that the forces are instead placed upon the flange 24 of an adjacent tray 212 when the packages 210 are in a stacked, horizontal position, similar to the bottom wall support feet 30. These side feet 236 also allow for avoiding placement of a force or load directly on top of the film substrate, i.e., the upper or outer film 42, of the respective package 210. This can help to protect the seal strength integrity of the upper film 42 across the top opening 22 of the tray 212. The sidewall support foot 236 can extend outward from adjacent portions of the sidewall 18 a distance that is less than an outer peripheral edge 28 of the flange 24 immediately adjacent the support foot 236, such that the support foot 236 and flange 24 can cooperate to support the package 10 in an upright orientation. When placed in an upright position upon a support surface, both the support foot 236 and flange 24 can rest in approximately the same plane.

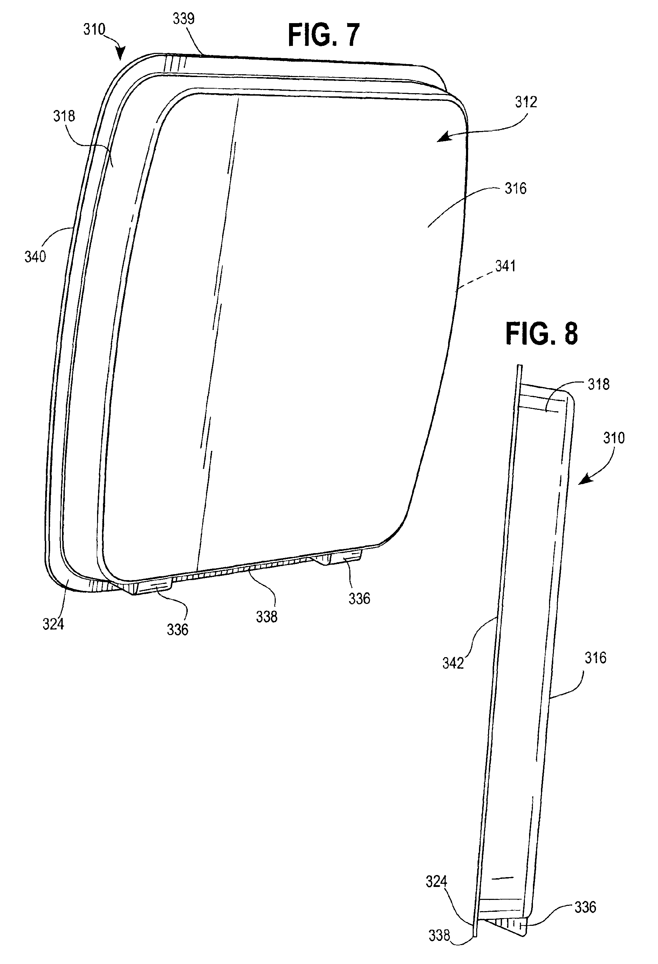

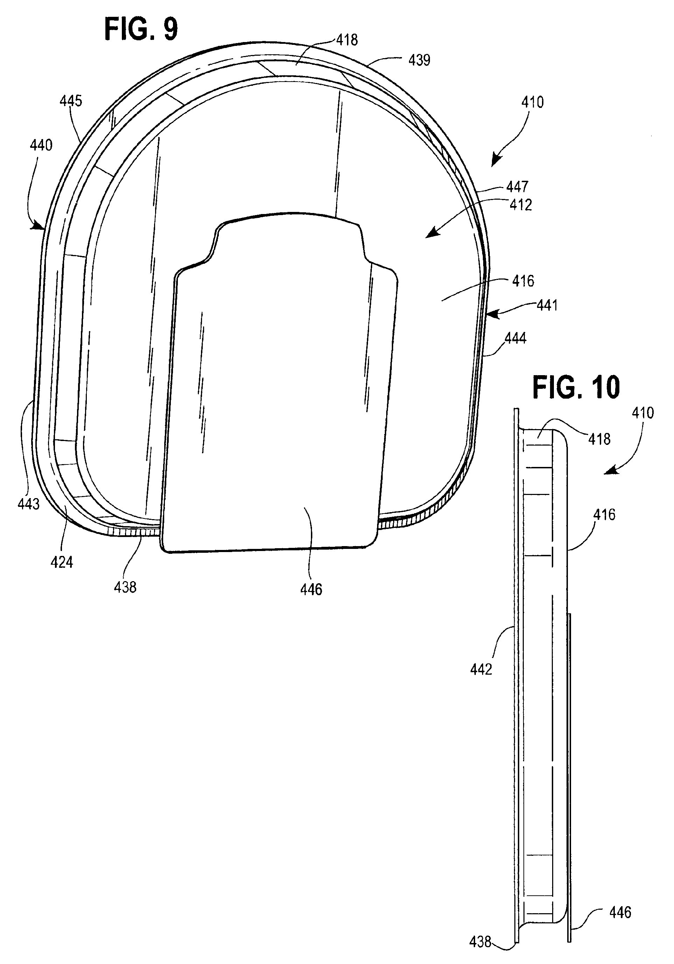

Support features other than sidewall feet may also be included at an exterior of the package 310, such as paperboard cards 446, that aid in standing the package 310 in an upright position. When the package 10, 110, 210, 310, 410 or 510 is stacked with other packages, the package 10, 110, 210, 310, 410 or 510 can stand vertically on their edge due to a combination of the support feature and the design of the package itself. The tray 12, 112, 212, 312, 412, and 512 can also have a portion of at least one edge that is straight or has a linear segment. The straight portion of the edge will preferably be the edge that the package will stand upon, *i.e*., the outer peripheral edge 28 of the package 10 immediately adjacent at least one of the support feet 236. Therefore, the combination of the straight edge of the package and at least one other support feature provide the adequate support necessary to stand the package in an upright position. In one aspect, the straight edge 338 of the tray 312 can be combined with a foot 336 that is positioned on the sidewall 318, as can be seen in FIGS. 7-8. The package 310 can be placed in an upright vertical position by resting upon the straight edge 338 and the support feature 336, such that the upright package 310 may angle slightly back. In another aspect, the straight edge 438 or 538 of the tray 412 or 512 can be combined with a back card 446 or 546, as shown in FIGS. 9-10 and 11-12.

Turning to FIGS. 7-8, the package 310 can have a rectangular shape that has four straight edge portions with slightly rounded corners, an upper side edge 339, a lower side edge 338, and a right 340 and left 341 side edge. One of the edges 338, *i.e*., the edge positioned at the lower side edge, can also contain an angled support foot 336 along its respective sidewall 318, and in this case can contain at least two angled support feet 336 along its sidewall 318. The sidewall feet 336 can be located adjacent the lower straight edge 338, such that when the package 310 is stood upright upon its lower side edge 338 containing the sidewall feet 336, the combination of the lower straight edge 338 together with the two sidewall feet 336 help to support the package 310 in an upright, vertical, albeit slightly angled, position.

In another aspect, the lower straight edge 438 of the tray 412 can work in unison with a back card 446 that is adhered to the exterior of the bottom wall 416 of the tray 412, as seen in FIGS. 9-10. Depending upon the angle of attachment of the back card 446, the tray 412 can either stand straight up, at essentially a 0 degree angle as shown in FIG. 10, or it can be slightly angled and at a slant. The back card 446 can extend downwards, toward the lower side edge 438, extending beyond the bottom wall 416 and sidewall 418 of the tray 412 to terminate just even with the outer peripheral edge 28 of the flange 24. The package 410 in this aspect can have three straight edge portions, with one of the straight edges, the lower edge 438, encompassing almost the entire lower side edge, while the other two straight edge portions do not necessarily extend along the entire side or edge 440 or 441 but can contain a straight edge portion 443 or 444 combined with a curved edge 445 or 447, respectively, that extends into a curved top edge 439 of the package, thus forming a half-rounded package with a straight bottom edge when supported in the upright position.

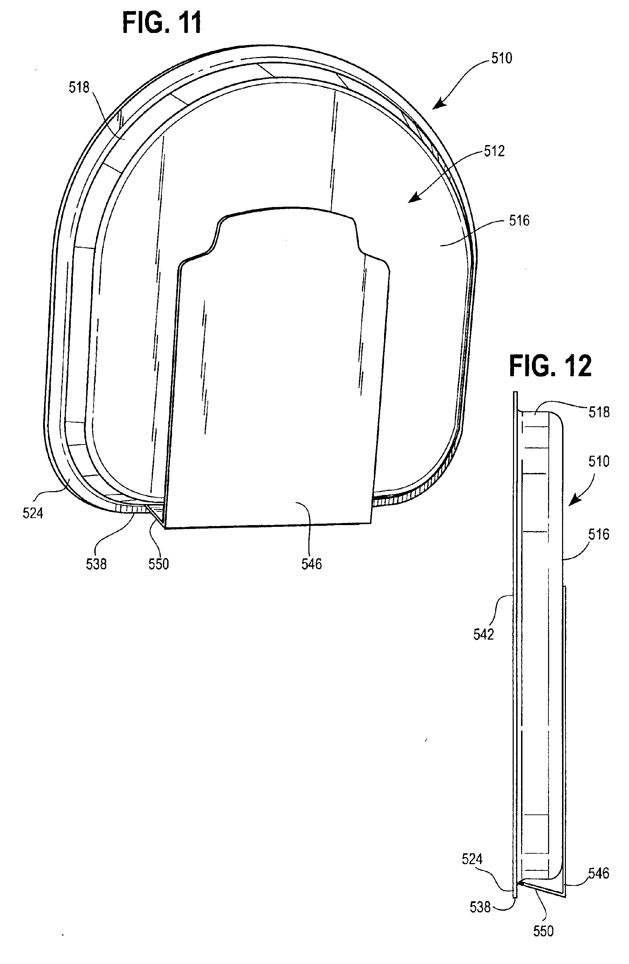

Similarly, in FIGS. 11 and 12, a package 510 similar to that in FIGS. 9 and 10 can be provided, however, the back card 546 of this package 510 extends generally horizontally, around a lower edge of the package 510. The back card 546 can include an extension or wrap around portion 550 that extends from the back card section 546 attached to the bottom wall 516 at an angle that is about 90 degrees or less. The extension 550 of the back card 546 extends adjacent the lower sidewall edge 538 and can terminate at or near the flange 524. The extension 550 can be adhered to a portion of the sidewall 518, either along generally its entire length or only at its termination point where it contacts the flange 524 or sidewall 518. The extension 550 of the back card 546, as shown in FIG. 10, is angled slightly upward such that the bottom or underside surface of the extension 550 does not contact the support surface upon which the package 510 is resting. The extension section 550 of the back card 546 can be used to supply additional graphics or indicia related to the product packaged therein. Alternatively, where the extension 550 of the back card 546 extends at about a 90 degree angle from the back card 546, then this extension section 550 can also assist in providing additional support to the package 510 when stood upright.

Due to the combination of support features taken together with the lower straight edge of the package, the packages can be stacked in upright positions while on a shelf display or packaged in cases without putting pressure on the adjacent package stacked behind the front package. This upright positioning allows for greater visibility of the front label or indicia on the package and avoids horizontal stacking of the packages, which places pressure from one package on top of another.

For package embodiments 310 that stand upright at a slant, such as in FIGS. 7-8, the angle that the package 310 "tilts" can be dependent upon the angle of the support foot 336 or similar support structure. For example, in the aspect shown in FIG. 8, the sidewall support feet 336 can be provided with a 20 degree draft, such that the amount of slant of the sidewall support foot 336 from a horizontal line perpendicular to the flange 324 can be at about 20 degrees. This 20 degree slant of the sidewall support foot 336 can result in the package 310 tilting at an angle of about 12 degrees from a vertical axis.

Although FIGS. 1-12 are shown with specific shapes, the different features of the different embodiments can be provided with any of the other embodiments shown and with any other appropriate shapes not illustrated.

The exterior surface of the tray can further include texturing, such as ridges, ribs, flutes or other protrusions added to the sidewall and/or the bottom wall of the tray. In one aspect, a plurality of protuberances or ribs 50 on the sidewall 18 of the package 10 can extend outwardly from the sidewall 18 approximately around the entire bottom wall 16 having a radius of curvature of about 3 mm at a high point and a length of about 12 mm. The ribs or protuberances 50 can be separated from each other by a gap of about 1.5 mm. The texturing associated with the tray can help to increase compression strength, rigidity and to protect the product within (*i.e*., protect the crust 46 of the pizza 44 from breaking), effectively providing a cushioning effect to the side surface of the food product. Additionally, the incorporation of the flange 24 around the perimeter of the package 10, and spaced a distance outward from the sidewall 18 of the package 10, can also provide further protection to the sides of the food product because an impact that is applied to the outermost edge of the package 10, will first contact the flange 24. The amount of breakage of the food product stored within the tray has been shown to be less than about 1% when measured by ASTM D4169.

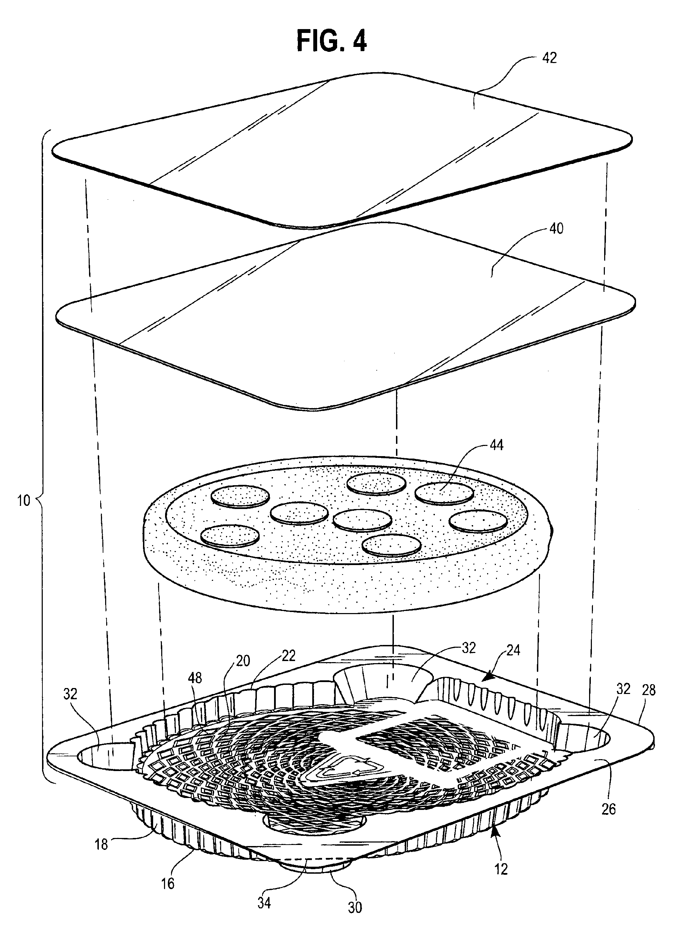

The shape and design of the overall package can contain a material and form combination that can achieve a non-zero viscous damping coefficient, per equations of motion in solid mechanics, resulting from the tray bottom wall patterning, texturing, and geometry. The design used can result in impact forces that are absorbed and smoothed to reduce fragile product breakage during dynamic oscillations that may occur during over the road transportation and direct store delivery distribution. In one aspect, the interior surface of the bottom wall 16 of the tray 12 can contain a plurality of raised ribbing or protuberances 48, rather than providing a smooth textured bottom, as shown in FIGS. 2 and 4. The plurality of raised protuberances 48 can be provided in any appropriate shape for supporting the food product thereon and for providing the necessary cushioning effect. In the aspect shown in FIGS. 2 and 4, the raised protuberances 48 have a diamond shape, however, any appropriate shape can be provided. Furthermore, the raised protuberances 48 can be arranged or aligned in any fashion that likewise provides the necessary cushioning effect. For instance, in FIG. 2, the raised protuberances 48 are arranged in a circular swirling pattern that circles about an approximate center or midpoint of the bottom wall 16, with the protuberances 48 taking on different sizes, *i.e*., larger, elongated sizes, as the protuberances 48 fan out towards the sidewall 18.

The food product disposed in the interior of the tray 12 can be supported by the plurality of raised protuberances 48. These raised protuberances 48 can absorb shock or impact forces through the bottom of the package 10, effectively providing a cushioning effect at the bottom surface of the food product, rather than passing these forces onto the food product. This feature can help prevent damage or breakage of the food product. The use of protuberances 48 can avoid the need for a cardboard insert card at the bottom for added cushioning. Similarly, the additional embodiments shown in FIGS. 5-12 can likewise contain raised protuberances along the bottom wall 18 in any shape or pattern that is appropriate for the food product being packaged, as well as alternately, or additionally, including a plurality of ribs along the sidewall.

The total area of the ribs 50 of the sidewall 18 of the tray 12 that are contactable by the side surface of the food product 44 is less than the total area of the sidewall 18 that is not contactable by the side surface of the food product 44 due to the ribs 50 of the sidewall. Additionally, the total area of the protuberances 48 of the bottom wall 16 of the tray 12 that are contactable by the bottom surface of the food product 44 is less than the total area of the bottom wall 16 that is not contactable by the bottom surface of the food product 44 due to the protuberances 48 of the bottom wall 16.

As discussed previously, the package 510 can have a back card 546 attached to a portion of the bottom wall 516 that can wrap around a sidewall 518 of the package 510, such as in an 'L' shape, where a portion of the back card 546 together with the lower peripheral flange edge can be used to support the package vertically, as in FIGS. 11 and 12. Optionally, the package can also contain an outer card that can be configured as a sleeve or holder-type card into which the package slips into. When a sleeve or holder-type configuration is provided, the outer card can also act as a stand or support feature to assist in providing the package in an upright position.

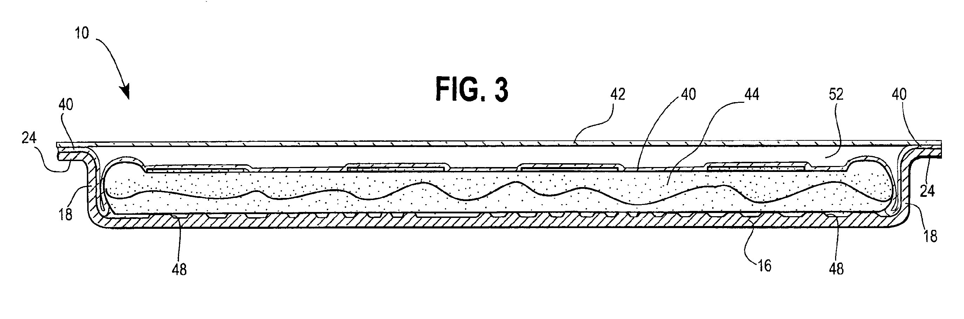

The flexible top portion 14 can comprise an inner film layer 40 and an outer film layer 42, as seen in FIGS. 3 and 4, or a first flexible film layer 40 and a second flexible film layer 42, respectively. The inner film layer 40 can be sealed around and onto the pizza 44 or food product contacting the top surface and at least a portion of the side surface of the pizza food product such that it forms a vacuum-tight skin seal to the tray 12. In one aspect, the inner film layer 40 can be sealed around the top of the pizza 44, such that it covers and seals the pizza toppings and the top portion of the crust 46, holding the toppings in place on the crust 46, effectively restricting their movement, and further seals around the edge or side of the crust 46 of the pizza 44. The ends of the inner film layer 40 can then be sealed to the upper flange 24 of the tray 12; thus, effectively sealing the pizza 44 in an air-tight package to the tray 12. The inner film layer 40 can be sealed by using vacuum skin packaging technology (VSP), which when sealed around the pizza 44 or food product forms essentially a skin-tight seal over the pizza product 44 due to the tight seal around it, effectively preventing movement or shifting of the pizza product relative to the tray 12. The inner film 40 also keeps the toppings in place on the crust 46, essentially immobilizing the toppings should they encounter movement external to the package 10, but not so tight that the toppings stick to the film 40.

The inner film 40 can be drawn down over the pizza food product 44 such that the inner film 40 generally conforms to the shape of the pizza 44 and, in particular, to the top and side shape of the pizza product 44. The inner film 40 can also contact the bottom wall 16 of the tray 12 before it is directed upward towards the upper flange 24 of the tray 12. As the inner film 40 is directed upwards, it can be contoured to the shape of the sidewall 18. The inner film 40 can be disposed adjacent a substantial portion of the sidewall 18 of the tray 12 to space the side surface of the food product from the sidewall 18 of the tray 12. In another aspect, the inner film 40 can be sealed to the bottom wall 16 before being directed upwards. Still alternatively, the inner film 40 can stop just short of touching the bottom wall 16, before being directed upwards toward the flange 24.

Optionally, the inner film 40 can be perforated to allow gas to migrate through the inner film layer 40 to the pizza product 44 faster than it would by passing through the film web itself. The perforations, or holes, allow for a delayed equilibration of gas to occur within the head space.

Still optionally, the inner film layer 40 may be applied by using a shrink wrap concept, thus applying a web or sheet of film to the product and heat-shrink sealing the film all the way around the food product before placing it in the tray 12. However, in utilizing the heat-shrink packing method the inner film 40 and outer film 42 must be removed and opened separately.

Additionally, at the ends of the inner film layer 40, where it is sealed to the flange 24 of the tray 12, the inner film 40 can be sealed to the flange 24 with a peelable seal. In contrast to typical VSP applied films, the inner film 40 herein can be heat-sealed to the flange 24, rather than just vacuum sealing it to the flange 24, thus providing a hermetically sealed enclosure about the food product. Additionally, a sealant can also be added to the flange 24 to increase adherence as well as application of heat sealing bars to the inner film 40 and flange 24.

The outer film 42 can be placed over the opening 22 of the tray 12 and over the inner film 40 to seal the tray 12 and cover the VSP wrapped pizza product 44. The outer film 42 can be sealed to the flange 24 of the tray 12 by sealing to the portion of the inner film 40 that is also sealed to the flange 24. The outer film 42 can form a permanent seal coextensive with the peelable heat-seal between the inner film portion 40 and the flange 24. The outer film layer 42 can comprise a barrier film layer, such that it prevents moisture and oxygen from entering into the interior recess of the tray 12. Additionally, the combination of the inner film 40 and outer film 42 can avoid the need for an extra package, such as a carton or box.

Furthermore, between the outer film 42 and the inner film 40 within the tray 12, where the outer film 42 can be spaced from the inner film 40 inwardly of the flange 24, there can be provided a gap or head space 52, or a first space, as seen in FIG. 3. This space 52, at its maximum height, can be up to about 1 inch. This space 52 between the two film layers can be filled with a modified atmosphere gas and/or typical atmospheric gas, such as a first gas substance or mixture, effective to cushion the top surface of the food product. A modified atmosphere gas can comprise any inert gas or non-atmospheric gas, such as results from modified atmosphere packaging (MAP). MAP can be carried out during the packaging process, prior to placing the outer film on the tray or simultaneously therewith, where the air can be displaced by the modified atmosphere via gas flushing. In one aspect, the air present in the head space 52 can first be evacuated from the tray 12 and then replaced by air having a modified content(s). The air in the head space 52 can be evacuated at a controlled rate and replaced by inert gases. These harmless inert gases can be obtained from air and satisfy high purity requirements. In one aspect, once the space 52 is flushed with gas, it can contain a pressure after flushing of about 500 mbar to about 700 mbar.

Inert gases that can be introduced to flush the head space 52 can include, in one aspect, nitrogen, carbon dioxide, carbon monoxide, or any combination thereof. The modified gas that is provided can also include an oxygen level of about 0% to about 8%, depending on the food product packaged therein. For instance, where a produce product is packaged it may be desirable to allow an oxygen level of up to about 8%; where a meat product is packaged, an environment containing no more than about 1% oxygen can be desired.

The head space 52 filled with the gas can provide a damping effect during transportation and distribution of the package 10, where it absorbs external energy from outside impacts and protects the contents of the package 10 from damage, thus effectively providing a cushioning effect to the top of the food product. This head space 52 filled with gas can also insulate the food product against rapid heat transfer, since by nature the interstitial space provides a lower heat transfer coefficient. The head space 52 can further help to protect the freshness of the crust 46 and toppings. The inner film 40 holding the pizza toppings firmly in place against the crust 46 of the pizza 44 together with the gas in the head space 52 add to keeping the freshness of the pizza product 44.

Alternatively, instead of evacuating and flushing the space 52, the space 52 can be pressurized. The pressurized space can act as a cushion, absorbing impact forces and further protecting the food product. The space 52 can be pressurized at a pressure that would offset normal forces from those above the package 10, such as when the packages 10 are stacked one on top of another, *i.e.*, the bottom wall 16 of one package 10 is placed on top of the outer film 42 of another package 10 below it.

Besides having a first gas flush in the space 52 between film layers, the package 10 can also have a second gas flush inserted into a second gas space between the inner film layer 40 and the tray 12, encompassing the space around the food product. In one aspect, the second gas flush can have a pressure between about 100 mbar to about 500 mbar, but at any rate the second gas pressure should be less than the first gas pressure of the head space 52, such that a pressure differential is created between the two gas areas.

Having a pressure differential where the pressure above the pizza 44, *i.e.,* in the first pressure in the head space 52, is greater than the pressure in and/or about the pizza 44 (*i.e*., the second pressure) can be beneficial to help keep all of the pizza toppings together and in place during distribution, shipping, and storage/display. Additionally, the pressure differential between the two areas also can help to keep the film in place during transport, such as when the package 10 is shipped over regions of high altitude, thus preventing seal breakage and leakage.

The second gas space between the inner film 40 and the pizza product 44 and tray 12 can either be completely evacuated of air or it can have a gas flush introduced with inert or atmospheric gases. Thus, the first and second gas compounds can be comprised of different gases. The type of gases used can be determined by the food product and the desired functionality of the package 10. Where a pizza product 44 is provided, a gas flush of inert gas(es) within the second gas space around the pizza 44 can be provided to preserve the pizza product 44. For instance, the inert gases are needed to interact with the dough/crust 46 of the pizza 44 in order to preserve the raw dough until cooking. Thus, different inert gases at the two different spaces can also help to manage the moisture and oxygen migration between the film layers.

Due to the combination of the package design and the introduction of the first and/or second gases flushed within its respective layer, the shelf life of the product therein can be extended. The shelf life of the food product can be at least about 120 days. In some instances the shelf life can be extended up to about 6 months, and in other instances, up to about 1 year.

Additionally, the outer film 42 can have an exterior surface, i.e., a surface that is directed away from the interior recess of the package 10, that can be provided with text, indicia, graphics, or other writings. The exterior surface of the outer film 42 allows for printing of such items directly thereon without deforming the surface of the film 42 and, furthermore, can also allow for placement of labels or other adhered items thereupon. Alternatively, the outer film 42 can be completely opaque and/or can comprise a colored film.

The outer film 42 and the inner film 40 can both be removed from the tray flange 24 together, *i.e*., using the same removal force to remove both at the same time. By one approach, the user can pull up on the outer film 42 which causes the outer film 42 to also pull up on the inner film 40 that is attached to it. A first bond strength between the inner film 40 and the flange 24 and a second bond strength between the outer film 42 and the inner film 40 can be selected to facilitate removal of the inner 40 and outer film 42 layers simultaneously. In one aspect, the second bond strength can be greater than the first bond strength. In one aspect, a pull tab or corner extension can be provided on the outer film 42 so that the user can pull on the pull tab to remove both films relatively simultaneously. Still, another approach can provide a pre-broken or pre-scored section 34 of the flange 24 at a corner edge thereof to allow a user to pull up at this corner section and to break off the portion of the flange 24, as illustrated in FIGS. 1-5. This break-away flange can in turn pull off the films 40 and 42 from the remaining flange 24 and from the food product, since the break-away corner piece is also attached to the film pulling it away as the corner is broken from the flange 24. Yet another approach can provide a small indentation in the flange 24 of the tray 12 at a corner section, which allows the user to slide a finger underneath the film layers 40 and 42 and to pull up directly upon the film layers 40 and 42 causing both to peel off and be removed together.

The pizza 44 or food product can be placed directly on the interior surface of the bottom wall 16 of the tray 12 during packaging. Optionally, the pizza or food product can first be placed directly upon an intermediate surface, such as parchment paper or a paperboard insert card, which is then placed upon the interior surface of the bottom wall 16. The intermediate surface can be used to offer additional assistance in removal of the pizza product 44, or where there is no finger notch, it can be the main method of removal of the pizza 44. Where parchment paper is used to support the pizza 44 thereupon, the parchment paper can further be used as a cooking surface, and the pizza product 44 can be placed into an oven together with the parchment paper. Additionally, where an insert card is used and the tray bottom wall 16 is clear or transparent, the backside of the insert card can also contain additional graphics or indicia that will be visible through the bottom wall 16 of the tray 12. Furthermore, an insert card can also absorb impact forces provided through the bottom wall 16 of the package 10, thus protecting the food product from direct exposure to these forces.

A method of filling, packaging the food product, and sealing the package are provided. In one aspect, a preformed tray can be provided for receiving a perishable food product therein, such as a pizza product 44 which can be placed in the tray 12. An inner film 40 is then placed over the opening 22 of the tray 12 and the tray 12 is passed to a vacuum-skin packaging station. Here, the inner film 40 is vacuum-sealed around the pizza 44 such that it is sealed relatively tightly against the top of the pizza 44 and along the side of the crust 46, almost-touching or touching the bottom wall 16 of the tray 12. In one aspect, the inner film 40 can also be sealed to the bottom wall 16 of the tray 12. In another aspect, the inner film 40 can be heated to allow it to stretch, and then it is brought down over the food product where a vacuum is drawn, shrinking the film 40 about the food. The ends of the inner film 40, however, are heat-sealed to the flange 24 of the tray 12 utilizing heat sealing bars. After the pizza 44 has been relatively hermetically sealed in this fashion, the outer film 42 can be placed over the tray 12. The tray 12 passes through a heat-sealing station that seals the edges of the outer film 42 to the flange 24 of the tray 12, on top of the inner film 40, thus creating a permanent seal between the outer film 42 and the portion of the inner film 40 already sealed to the flange 24. Optionally, the films 40 and 42 can be pre-heated to reduce the forces that are required for permanent deformation. During the tray sealing process, the tray 12 does not deform and can withstand the dual sealing of the films 40 and 42 to its flange 24.

The rigid tray 12 can be preformed or it can be formed on a horizontal thermoform, fill, and seal (HTFFS) machine, such as is provided by Multivac, Wolfertschwenden, Germany. The tray material can be made out of any appropriate rigid or semi-rigid plastic material for food contact, such as polyester, polypropylene, high-impact polystyrene (HIPS), high density polyethylene (HDPE), amorphous polyethylene terephthalate (APET), or combinations thereof. In one aspect, the tray 12 can comprise an APET material. The tray 12 can also have oxygen and/or moisture barrier properties. The term "rigid" is used herein to indicate that the structures made of these materials have the ability to generally retain their respective shapes during normal handling, and includes semi-rigid structures.

In one aspect, the tray 12 can be transparent or translucent. In another aspect, the tray 12 can be opaque and/or colored. The flange 24 that surrounds the opening 22 of the tray 12 can have a thickness that is less than about 15 mils.

The inner film layer 40 can be a clear or transparent plastic film that has been vacuum-sealed over the product and heat-sealed to the flange 24 of the tray 12. The inner film 40 does not prevent the migration of oxygen and/or moisture therethrough. The thickness of the inner film 40 can vary and, in one aspect, can be from about 2.5 to about 10 mils thick and, preferably, can be about 2.5 to about 5 mils thick. The inner film layer 40 can comprise any appropriate plastic film for VSP, such as polyethylene, low density polyethylene (LDPE), polyvinyl chloride (PVC), ethyl vinyl acetate (EVA), ethyl vinyl alcohol (EVOH), polypropylene, or combinations thereof. The plastic film of the inner film layer 40 can be placed over the pizza product 44 and a vacuum can be applied to form a firm fit around the product. In one aspect, the inner film layer 40 can comprise a multi-layer thermoformable polyethylene film.

The outer film 42 can also comprise a clear or transparent plastic film, or preferably, the outer film 42 can be opaque and/or colored. The outer film 42 can also be printed upon with graphics and/or indicia directly thereupon. The outer film 42 can comprise any appropriate plastic film that has oxygen barrier properties and/or moisture barrier properties, such as polyethylene terephthalate (PET), polyethylene, ethylene vinyl alcohol (EVOH), ethylene vinyl acetate (EVA), amorphous polyethylene terephthalate (APET), polyester, and combinations thereof. In one aspect, the outer film 42 can comprise a laminate film, such as a laminate film having an outer polyester layer with an inner polyethylene sealant layer, where the inner polyethylene layer can be either extrusion or adhesion bonded. The outer film 42 can have a thickness of about 2 mils to about 10 mils. In one aspect, the outer film 42 can have a high coefficient of friction (COF), such as greater than about 0.5.

The size of the package 10, 110, 210, 310, 410 or 510 can be dependent upon the size of the food product that is to be stored therein. In one aspect, the package 10, 110, 210, 310, 410 or 510 dimensions can range from about 200 mm to about 400mm in length, about 200 mm to about 400mm in width, and a package depth or height from about 12 mm to about 70 mm.

Typical food products to be packaged in the package disclosed herein are perishable food products. In one aspect, a pizza food product 44 is packaged, however, other perishable foods may also be packaged such as sandwiches, frozen coextruded and filled bagels, stromboli, and the like. In another aspect, any frozen food product requiring a high barrier protection (*i.e*., moisture and/or oxygen barrier properties) in a modified atmosphere head space containing inert gas with very low levels of residual oxygen can be packaged.

From the foregoing, it will be appreciated a food package having semi-rigid or rigid and flexible portions is provided. However, numerous modifications and variations could be made thereto by those skilled in the art without departing from the scope of the package set forth in the claims. Therefore, the disclosure is not limited to the aspects and embodiments described hereinabove, or to any particular embodiments. Various modifications to the package could be made which can result in substantially the same package.

## Claims

1. A packaged food product comprising:
a rigid tray (12) having a bottom wall (16) and an upstanding sidewall (18) that terminates at a flange (24) extending about the periphery of the sidewall (18), the bottom wall (16) and upstanding sidewall (18) defining an interior of the tray (12) and the bottom wall having a plurality of raised protuberances (48);
a food product (44) disposed in the interior of the tray (12) and supported by the plurality of raised protuberances (48), the food product (44) having a substantially planar bottom surface, a side surface and a top surface with a plurality of displaceable toppings, the raised protuberances (48) effective to cushion the bottom surface of the food product (44); **characterized in that** it further comprises:
a first flexible film layer (40) vacuum sealing the food product (44) to the tray (12) and restricting movement of the displaceable toppings, the first flexible film layer (40) contacting the top surface and at least a portion of the side surface of the food product (44), the first film layer (40) forming a peelable heat-seal with the flange (24) of the tray;
a second flexible film layer (42) positioned over the tray (12) and the first flexible film layer (40) and sealed to the first film layer (40) with a permanent seal coextensive with the peelable heat-seal between the first flexible film layer (40) and the flange (24) of the tray (12), the second flexible film layer (42) being spaced from the first flexible film layer (40) inwardly of the flange of the tray with a gas layer (52) therebetween effective to cushion the top surface of the food product (44).

2. The package according to claim 1, wherein the tray (12) includes at least one support foot (236) of the sidewall (18) that extends outward from adjacent portions of the sidewall a distance less than an outer peripheral edge (28) of the flange (24) immediately adjacent the support foot (236), the support foot and flange cooperating to support the package in an upright orientation.

3. The package according to claim 2, wherein the immediately adjacent outer peripheral edge (28) of the flange (24) has a linear segment.

4. The package according to claim 3, wherein the tray (12) includes at least one support foot (30) of the bottom wall (16), configured to rest on the flange of a like package (10) when stacked on top of the like package in a horizontal position.

5. The package according to claim 1, wherein the tray includes a plurality of ribs (50) extending outwardly from the sidewall (18) to cushion the side surface of the food product (44).

6. The package according to claim 5, wherein:
the total area of the ribs (50) of the sidewall (18) of the tray that are contactable by the side surface of the food product (44) is less than the total area of the sidewall (18) that is not contactable by the side surface of the food product due to the ribs of the sidewall;
and the total area of the protuberances (48) of the bottom wall (16) of the tray (12) that are contactable by the bottom surface of the food product (44) is less than the total area of the bottom wall (16) that is not contactable by the bottom surface of the food product due to the protuberances of the bottom wall.

7. The package according to claim 1, wherein the tray (12) includes a back card (446,546) attached to an exterior surface of the bottom wall (16) of the tray, the back card extending past the bottom wall (16) so that the package (10) can be supported in an upright position upon a lower edge of the back card (446,546) and a lower edge of the flange 438,538.

8. The package according to claim 7, wherein the back card (546) wraps around a portion of the sidewall (18) of the package (10).

9. The package according to claim 1, wherein the first film layer (40) is disposed adjacent a substantial portion of the sidewall (18) of the tray (12) to space the side surface of the food product (44) from the sidewall (18) of the tray.

10. The package according to claim 1, wherein a bond strength between the first film layer (40) and the flange (24) and a bond strength between the second film layer (42) and the first film layer (40) are selected to facilitate removal of the first and second film layers (40,42) simultaneously.

11. The package according to claim 1, wherein the gas layer (52) comprises one or more modified atmosphere inert gases and/or a typical atmospheric gas.

12. The package according to claim 11, wherein a second gas is inserted into the space between the first layer (40) and the tray (12), the second gas having a pressure less than a pressure of the first gas layer (52).

13. The package according to claim 1, wherein:
the first film layer (40) is selected from the group consisting of polyethylene, low density polyethylene (LDPE), polyvinyl chloride (PVC), ethyl vinyl acetate (EVA), ethyl vinyl alcohol (EVOH), polypropylene, and combinations thereof;
the second film layer (42) is air impermeable and selected from the group consisting of polyethylene terephthalate (PET), polyethylene, ethylene vinyl alcohol (EVOH),
ethylene vinyl acetate (EVA), amorphous polyethylene terephthalate (APET), polyester, and combinations thereof; and
the tray (12) is selected from the group consisting of polyester, polypropylene, high-impact polystyrene (HIPS), high density polyethylene (HDPE), amorphous polyethylene terephthalate (APET), and combinations thereof.

14. The package according to claim 1, wherein the food product (44) is a pizza product.

15. The package according to claim 1, wherein the sidewall (18) of the tray (12) has at least one outwardly-extending recess (32) sized to facilitate access to a portion of the side surface of the food product (44) for removal of the food product from the tray (12) after the second and first film layers (40,42) have been removed.

## Patentansprüche

1. Verpacktes Nahrungsmittelprodukt mit:
einer starren Schale (12) mit einer Bodenwand (16) und einer aufrecht stehenden Seitenwand (18), die an einem sich über den Umfang der Seitenwand (18) erstreckenden Flansch (24) endet, wobei die Bodenwand (16) und die aufrecht stehende Seitenwand (18) einen Innenraum der Schale (12) festlegen und die Bodenwand ein Vielzahl von erhabenen Höckern (48) aufweist;
einem Nahrungsmittelprodukt (44), das im Innenraum der Schale (12) angeordnet ist und von der Vielzahl von erhabenen Höckern (48) getragen wird, wobei das Nahrungsmittelprodukt (44) eine im Wesentlichen ebene Bodenfläche, eine Seitenfläche und eine obere Fläche mit einer Vielzahl von verschiebbaren Garnierungen aufweist, wobei die erhabenen Höcker (48) die Bodenfläche des Nahrungsmittelproduktes (44) wirksam polstern; **dadurch gekennzeichnet, dass** es weiterhin Folgendes umfasst:
eine erste flexible Folienschicht (40), die das Nahrungsprodukt (44) mit der Schale (12) vakuumversiegelt und eine Bewegung der verschiebbaren Garnierungen begrenzt, wobei die erste flexible Folienschicht (40) die obere Fläche und mindestens einen Abschnitt der Seitenfläche des Nahrungsmittelproduktes (44) berührt, wobei die erste Folienschicht (40) eine abziehbare Heißversiegelung mit dem Flansch (24) der Schale bildet;
eine zweite flexible Folienschicht (42), die über der Schale (12) und der ersten flexiblen Folienschicht (40) positioniert ist und die an der ersten Folienschicht (40) mit einem dauerhaften Siegel versiegelt ist, das flächengleich mit der abziehbaren Heißversiegelung zwischen der ersten flexiblen Folienschicht (40) und dem Flansch (24) der Schale (12) ist, wobei die zweite flexible Folienschicht (42) von der ersten flexiblen Folienschicht (40) innerhalb des Flansches der Schale durch eine Gasschicht (52) beabstandet ist, die zwischen diesen wirksam ist, um die obere Fläche des Nahrungsmittelproduktes (44) zu polstern.

2. Verpackung gemäß Anspruch 1, wobei die Schale (12) mindestens einen Stützfuß (236) der Seitenwand (18) aufweist, der sich nach außen von angrenzenden Abschnitten der Seitenwand in einem geringeren Abstand als eine äußere Umfangskante (28) des Flansches (24) erstreckt, der unmittelbar an den Stützfuß (236) angrenzt, wobei der Stützfuß und der Flansch zur Abstützung der Verpackung in einer aufrechten Ausrichtung zusammenwirken.

3. Verpackung gemäß Anspruch 2, wobei die unmittelbar angrenzende, äußere Umfangskante (28) des Flansches (24) ein lineares Segment aufweist.

4. Verpackung gemäß Anspruch 3, wobei die Schale (12) mindestens einen Stützfuß (30) der Bodenwand (16) aufweist, der so ausgeführt ist, dass er beim Stapeln auf einer ähnlichen Verpackung in einer waagrechten Position auf dem Flansch der ähnlichen Verpackung (10) aufliegt.

5. Verpackung gemäß Anspruch 1, wobei die Schale mehrere Rippen (50) aufweist, die sich nach außen von der Seitenwand (18) erstrecken, um die Seitenfläche des Nahrungsmittelproduktes (44) zu polstern.

6. Verpackung gemäß Anspruch 5, wobei:
die Gesamtfläche der Rippen (50) der Seitenwand (18) der Schale, welche mit der Seitenfläche des Nahrungsmittelproduktes (44) in Berührung kommen können, geringer ist als die Gesamtfläche der Seitenwand (18), die aufgrund der Rippen der Seitenwand nicht mit der Seitenfläche des Nahrungsmittelproduktes in Berührung kommen kann;
und die Gesamtfläche der Höcker (48) der Bodenwand (16) der Schale (12), die mit der Bodenfläche des Nahrungsmittelproduktes in Berührung kommen können, geringer ist als die Gesamtfläche der Bodenwand (16), die aufgrund der Höcker der Bodenwand nicht mit der Bodenfläche des Nahrungsmittelproduktes in Berührung kommen kann.

7. Verpackung gemäß Anspruch 1, wobei die Schale (12) eine an einer Außenfläche der Bodenwand (16) der Schale angebrachte Papprückwand (446, 546) aufweist, wobei sich die Papprückwand entlang der Bodenwand (16) erstreckt, so dass die Verpackung (10) in einer aufrechten Position auf einer Unterkante der Papprückwand (446, 546) und einer Unterkante des Flansches (438, 538) abgestützt werden kann.

8. Verpackung gemäß Anspruch 7, wobei die Papprückwand (546) um einen Abschnitt der Seitenwand (18) der Verpackung (10) gewickelt ist.

9. Verpackung gemäß Anspruch 1, wobei die erste Folienschicht (40) angrenzend an einen wesentlichen Abschnitt der Seitenwand (18) der Schale (12) angeordnet ist, um die Seitenfläche des Nahrungsmittelproduktes (44) von der Seitenwand (18) der Schale zu beabstanden.

10. Verpackung gemäß Anspruch 1, wobei eine Haftfestigkeit zwischen der ersten Folienschicht (40) und dem Flansch (24) und eine Haftfestigkeit zwischen der zweiten Folienschicht (42) und der ersten Folienschicht (40) so gewählt wird, dass die gleichzeitige Entfernung der ersten und zweiten Folienschicht (40, 42) vereinfacht wird.

11. Verpackung gemäß Anspruch 1, wobei die Gasschicht (52) ein oder mehrere modifizierte atmosphärische Inertgase und/oder ein typisches atmosphärisches Gas enthält.

12. Verpackung gemäß Anspruch 11, wobei ein zweites Gas in den Raum zwischen der ersten Schicht (40) und der Schale (12) eingeführt wird, wobei das zweite Gas einen geringeren Druck aufweist als die erste Gasschicht (52).

13. Verpackung gemäß Anspruch 1, wobei:
die erste Folienschicht (40) aus der Gruppe bestehend aus Polyethylen, Polyethylen mit geringer Dichte (LDPE), Polyvinylchlorid (PVC), Ethylvinylacetat (EVA), Ethylvinylalkohol (EVOH), Polypropylen sowie Kombinationen aus diesen ausgewählt ist;
die zweite Folienschicht (42) luftundurchlässig und aus der Gruppe bestehend aus Polyethlyenterephthalat (PET), Polyethylen, Ethylenvinylalkohol (EVOH), Ethylenvinylacetat (EVA), amorphem Polyethylenterephthalat (APET), Polyester sowie Kombinationen aus diesen ausgewählt ist; und
die Schale (12) aus der Gruppe bestehend aus Polyester, Polypropylen, hochschlagfestem Polystyrol (HIPS), hochdichtem Polyethylen (HDPE), amorphem Polyethylenterephthalat (APET) sowie Kombinationen aus diesen ausgewählt ist.

14. Verpackung gemäß Anspruch 1, wobei das Nahrungsmittelprodukt (44) aus einem Pizzaprodukt besteht.

15. Verpackung gemäß Anspruch 1, wobei die Seitenwand (18) der Schale (12) mindestens eine sich nach außen erstreckende Vertiefung (32) aufweist, die so bemessen ist, dass sie den Zugang zu einem Abschnitt der Seitenfläche des Nahrungsmittelproduktes (44) erleichtert, um das Nahrungsmittelprodukt aus der Schale (12) herauszunehmen, nachdem die zweite und erste Folienschicht (40, 42) entfernt worden ist.

## Revendications

1. Produit alimentaire emballé comprenant :
un plateau rigide (12) présentant une paroi inférieure (16) et une paroi latérale droite (18) qui se termine en un collet (24) s'étendant sur la périphérie de la paroi latérale (18), la paroi inférieure (16) et la paroi latérale droite (18) définissant un intérieur du plateau (12) et la paroi inférieure présentant une pluralité de protubérances exhaussées (48) ;
un produit alimentaire (44) disposé dans l'intérieur du plateau (12) et supporté par la pluralité de protubérances exhaussées (48), le produit alimentaire (44) présentant une surface inférieure essentiellement plane, une surface latérale et une surface supérieure avec une pluralité de garnitures déplaçables, les protubérances exhaussées (48) étant efficaces pour amortir la surface inférieure du produit alimentaire (44) ;
**caractérisé en ce qu'**il comprend en outre :
une première couche de film flexible (40) qui scelle sous vide le produit alimentaire (44) sur le plateau (12) et limite le mouvement des garnitures déplaçables, la première couche de film flexible (40) étant en contact avec la surface supérieure et au moins une partie de la surface latérale du produit alimentaire (44), la première couche de film (40) formant avec le collet (24) du plateau un thermo-scellement détachable;
une deuxième couche de film flexible (42) positionnée au-dessus du plateau (12) et de la première couche de film flexible (40) et scellée sur la première couche de film (40) avec un joint d'étanchéité permanent de même étendue que le thermo-scellement détachable entre la première couche de film flexible (40) et le collet (24) du plateau (12), la deuxième couche de film flexible (42) étant espacée de la première couche de film flexible (40) à l'intérieur du collet du plateau par une couche de gaz (52) efficace pour amortir la surface supérieure du produit alimentaire (44).

2. Emballage selon la revendication 1, dans lequel le plateau (12) comprend au moins un pied de support (236) de la paroi latérale (18) qui s'étend vers l'extérieur à partir de parties adjacentes de la paroi latérale sur une distance plus petite qu'un bord (28) périphérique extérieur du collet (24) immédiatement adjacent au pied de support (236), le pied de support et le collet coopérant pour supporter l'emballage dans une orientation droite.

3. Emballage selon la revendication 2, dans lequel le bord (28) périphérique extérieur immédiatement adjacent du collet (24) présente un segment linéaire.

4. Emballage selon la revendication 3, dans lequel le plateau (12) comprend au moins un pied de support (30) de la paroi inférieure (16), configuré pour reposer sur le collet d'un emballage similaire (10) lorsqu'il est empilé au-dessus de l'emballage similaire dans une position horizontale.

5. Emballage selon la revendication 1, dans lequel le plateau comprend une pluralité de nervures (50) s'étendant vers l'extérieur à partir de la paroi latérale (18) pour amortir la surface latérale du produit alimentaire (44).

6. Emballage selon la revendication 5, dans lequel :
la surface totale des nervures (50) de la paroi latérale (18) du plateau qui sont susceptibles d'être en contact avec la surface latérale du produit alimentaire (44) est inférieure à la surface totale de la paroi latérale (18) qui n'est pas susceptible d'être en contact avec la surface latérale du produit alimentaire en raison des nervures de la surface latérale ;
et la surface totale des protubérances (48) de la paroi inférieure (16) du plateau (12) qui sont susceptibles d'être en contact avec la surface inférieure du produit alimentaire (44) est inférieure à la surface totale de la paroi inférieure (16) qui n'est pas susceptible d'être en contact avec la surface inférieure du produit alimentaire en raison des protubérances de la paroi inférieure.

7. Emballage selon la revendication 1, dans lequel le plateau (12) comprend un carton arrière (446, 546) attaché à une surface extérieure de la paroi inférieure (16) du plateau, le carton arrière s'étendant au-delà de la paroi inférieure (16) de sorte que l'emballage (10) peut être supporté dans une position droite sur un rebord inférieur du carton arrière (446, 546) et un rebord inférieur du collet (438, 538).

8. Emballage selon la revendication 7, dans lequel le carton arrière (546) enveloppe une partie de la paroi latérale (18) de l'emballage (10).

9. Emballage selon la revendication 1, dans lequel la première couche de film (40) est disposée de manière adjacente à une partie substantielle de la paroi latérale (18) du plateau (12) pour espacer la surface latérale du produit alimentaire (44) de la paroi latérale (18) du plateau.

10. Emballage selon la revendication 1, dans lequel une force de liaison entre la première couche de film (40) et le collet (24) et une force de liaison entre la deuxième couche de film (42) et la première couche de film (40) sont choisies pour faciliter l'enlèvement des première et deuxième couches de film (40, 42) simultanément.

11. Emballage selon la revendication 1, dans lequel la couche de gaz (52) comprend un ou plusieurs gaz inertes d'atmosphère modifiés et/ou un gaz atmosphérique typique.

12. Emballage selon la revendication 11, dans lequel un deuxième gaz est inséré dans l'espace entre la première couche (40) et le plateau (12), le deuxième gaz présentant une pression inférieure à une pression de la première couche de gaz (52).

13. Emballage selon la revendication 1, dans lequel :
la première couche de film (40) est choisie parmi le groupe constitué de polyéthylène, polyéthylène basse densité (PEBD), chlorure de polyvinyle (PVC), éthylène acétate de vinyle (EVA), éthylène alcool vinylique (EVOH), polypropylène, et combinaisons de ceux-ci ;
la deuxième couche de film (42) est imperméable à l'air et est choisie parmi le groupe constitué de polytéréphtalate d'éthylène (PET), polyéthylène, éthylène alcool vinylique (EVOH), éthylène acétate de vinyle (EVA), polytéréphtalate d'éthylène amorphe (APET), polyester, et combinaisons de ceux-ci ; et
le plateau (12) est choisi parmi le groupe constitué de polyester, polypropylène, polystyrène à résistance élevée aux chocs (HIPS), polyéthylène haute densité (PEHD), polytéréphtalate d'éthylène amorphe (APET), et combinaisons de ceux-ci.

14. Emballage selon la revendication 1, dans lequel le produit alimentaire (44) est un produit de pizza.

15. Emballage selon la revendication 1, dans lequel la paroi latérale (18) du plateau (12) présente au moins un évidement (32) s'étendant vers l'extérieur dimensionné pour faciliter l'accès à une partie de la surface latérale du produit alimentaire (44) pour enlever le produit alimentaire du plateau (12) après que les deuxième et première couches de film (40, 42) ont été enlevées.
